(19)

Europäisches
Patentamt
European
Patent Office
Office européen
des brevets

(11) **EP 2 006 766 A2**

(12) **EUROPEAN PATENT APPLICATION**

(43) Date of publication:
**24.12.2008 Bulletin 2008/52**

(51) Int Cl.:
***G06F 7/72*** *(2006.01)*

(21) Application number: **07017163.2**

(22) Date of filing: **01.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **20.06.2007 US 820615**

(71) Applicant: **O2Micro, Inc.**
**Santa Clara, CA 95054 (US)**

(72) Inventors:
• **Wei, Franny**
**Haidian District**
**Beijing 100044 (CN)**
• **Qiu, Di**
**Haidian District**
**Beijing 100044 (CN)**

(74) Representative: **Jungen, Rolf**
**Lippert, Stachow & Partner**
**Frankenforster Strasse 135-137**
**51427 Bergisch Gladbach (DE)**

(54) **HASH function implement with ROM and CSA**

(57) A hash unit for obtaining a hash value from hashing a set of parameters and a protocol parameter. The hash unit has a plurality of memory units for receiving the set of parameters and outputting a plurality of multiplication results, a first plurality of addition logics for receiving the plurality of multiplication results for outputting an addition result, and a second plurality of addition logics to generate the hash value wherein the hash value being equal to the addition result modulo a modulus constant.

EP 2 006 766 A2

**Description**

TECHNICAL FIELD OF THE INVENTION

The present invention relates to computing logics in general and, in particular, to hash computing units.

BACKGROUND OF THE INVENTION

The use of network based electronic communications and information processing systems for information control and information retrieval has rapidly proliferated into modern business environments. All kinds of information are transmitted among users through packet switching via networks, such as Local Area Networks (LAN), Wide Area Networks (WAN), or the Internet. Packet switching refers to subdividing data into a number of smaller units of data, or packets, and routing the packets individually through a number of nodes on a communications network.

Businesses, governments and individuals rely heavily on the digital communication networks, and malicious attacks may result in catastrophic economic loss or embarrassment. Consequently, network security has become a major concern for business, government and individuals using the computer as a communication vehicle and firewall servers have been extensively used to address this concern. A network firewall server can keep a table for storing packet labels known to be part of a packet stream in a transmission session, such as Transmission Control Protocol (TCP) session.

A hash function may be used to distinguish header values of a packet. The input of hash unit is an ordered concatenation of bits from one or more packet headers which may include traffic information, such as source Internet Protocol (IP) address, destination IP address, source port, destination port and protocol type. The output of a hash function is generally a smaller number of bits that can be used as an index or label of a session table. Then, packet filtering rules or filters of the firewall can be configured to allow or deny traffic based on one or more of the above variables.

The hash function may be simple or complex. For instance, the above-mentioned traffic information can be hashed using a specific hash function Equation (1) as follows:

$$\text{Result} = (0\text{x}42541\text{AFB} * \text{IP\_SA} + 0\text{x}5\text{B}72939\text{D} * \text{IP\_DA} +$$
$$0\text{x}2\text{FC}81\text{E}2\text{D} * \text{S\_Port} + 0\text{x}E1\text{B}5973\text{E} * \text{D\_Port} +$$
$$\text{Protocol}) \bmod 0\text{x}\text{FFFFF} \ldots\ldots\ldots\ldots\ldots\ldots\ldots\ldots\ldots\ldots\ldots\ldots\ldots (1)$$

Where Result which is the smaller number is the resulting value of the hash function Equation (1), or in other words, is the hash value. IP_SA is source IP address, IP_DA is destination IP address, S_Port is source port, D_Port is destination port, Protocol is protocol type, and "0x" means the succeeding constants are numbers in hexadecimal.

Thus, the result of the hash function in Equation (1), which will be filled into the session table, is calculated by multiplication and addition. In other words, a first set of parameters, such as IP_SA, IP_DA, S_Port and D_Port and Protocol in the Equation (1), will be hashed into another parameter, i.e., the hash value, which has smaller bit numbers.

An approach in the prior art to hash those parameters is using a complex combination logic to implement multiple bits (such as 32-bit when the protocol is TCP) multiplication and a general adder to implement multiple bits (such as 32-bit when the protocol is TCP) addition. Unfortunately, the 32-bit multiplication logic needs a large memory space, which hence increases cost. The 32-bit multiplication logic can be even more problematic when the logic is designed to perform at high-speed, or the hash value has to be calculated within a very small number of clock cycles.

Thus, the hashing logic in the prior art is problematic under the conventional hashing schemes, and also has difficulty in scaling efficiently to fit into smaller memory spaces. The hashing logic in the prior art has difficulty in hashing input variables into the smaller number results with regular multiplication logic and adders. Additionally, hashing logic in the prior art may spend several clock cycles to implement the hash function, which poses difficulty for implementation in high-speed hardware.

Therefore, it is desirable to have a hash unit using smaller memory spaces and less clock cycles to implement the hash function at high-speed and is to such logic this invention is primarily directed.

SUMMARY OF THE INVENTION

There is provided a hash unit implementing a hash function equation using a set of 32-bit variables, a set of constants, a protocol parameter, a modulus constant and a hash value for hashing the set of 32-bit variables and the protocol parameter to the hash value. The hash unit includes an addition unit and a modulus unit. The addition unit is capable of doing multiplication and addition of the hash function equation. Each of the set of 32-bit variables is separated into four 8-bit variables and the 8-bit variables are inputted into the addition unit for outputting an interim addition result in one clock cycle. An addition result of the set of 32-bit variables is generated in four clock cycles and separated into a first set of addition result bits and a second set of addition result bits. The modulus unit is capable of doing a modulus calculation of the hash function equation. The modulus unit includes a first plurality of Carry Save Adders (CSA) and a first adder. The first plurality of CSAs is capable of adding the first set of addition result bits and the second set of addition result bits into a first result and a second result in one clock cycle. The first adder is capable of adding the first result and the second result into an interim hash value in one clock cycle. Therefore, the interim hash value is outputted as the hash value in two clock cycles when the interim hash value is less than the modulus constant.

There is also provided a hash unit for obtaining a hash value from hashing a set of parameters and a protocol parameter. The hash unit includes a plurality of memory units, a first plurality of addition logics and a second plurality of addition logics. The plurality of memory units is capable of receiving the set of parameters and outputting a plurality of multiplication results corresponding to multiplication between the set of parameters and a plurality of interim modulus constants. The first plurality of addition logics is capable of receiving the plurality of multiplication results for outputting an addition result by adding up the plurality of multiplication results and the protocol parameter. The addition result is separated into a plurality of partial results, and each of the plurality of partial results is equal to or less than the modulus constant. The second plurality of addition logics is capable of receiving the plurality of partial results of the addition result for adding the plurality of partial results together to generate the hash value. The hash value is equal to a sum of the plurality of partial results of the addition result.

Finally, there is provided a method for obtaining a hash value from hashing a set of parameters. The method includes the steps of: obtaining a plurality of multiplication results by multiplying each parameter from the set of parameters by a respective interim modulus constant; obtaining an addition result by adding the plurality of multiplication results; obtaining a modulus result by calculating the addition result modulo a modulus constant; and outputting the modulus result as the hash value. The step of obtaining a modulus result includes the steps of: obtaining a first remainder and a first quotient by dividing the addition result by the modulus constant plus 1; obtaining a second remainder and a second quotient by dividing the first quotient by the modulus constant plus 1; repeating the step of dividing the quotient until the obtained quotient is equal to zero; and adding the remainders when the sum of the remainders is the modulus result.

BRIEF DESCRIPTION OF THE DRAWINGS

For a better understanding of the present invention, together with other objects, features and advantages, reference should be made to the following detailed description which should be read in conjunction with the following figures wherein like numerals represent like parts:

FIG. 1 is a diagram showing a multiplication ROM according to one embodiment of the invention.

FIG. 2 is a hash unit implementing hash function with ROMs and CSAs according to one embodiment of the invention.

FIG. 3 is a flowchart showing a method for hashing a first set of parameters into a second set of parameters, in accordance with one embodiment of the present invention.

**DESCRIPTION OF THE EMBODIMENT**

Reference will now be made in detail to the embodiments of the present invention, hash function implement with ROM and CSA. While the invention will be described in conjunction with the embodiments, it will be understood that they are not intended to limit the invention to these embodiments. On the contrary, the invention is intended to cover alternatives, modifications and equivalents, which may be included within the spirit and scope of the invention as defined by the appended claims.

Furthermore, in the following detailed description of the present invention, numerous specific details are set forth in order to provide a thorough understanding of the present invention. However, it will be appreciated by one of ordinary skill in the art that the present invention may be practiced without these specific details. In other instances, well known methods, procedures, and components have not been described in detail as not to unnecessarily obscure aspects of the present invention.

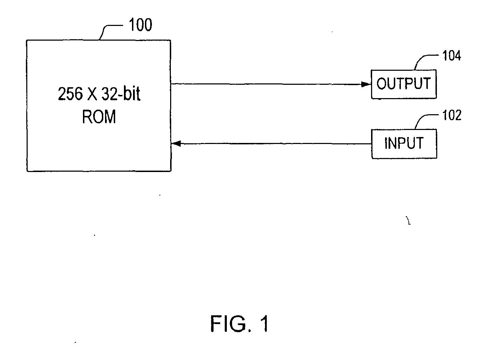

A memory unit, such as a 256*32 bits ROM 100 which implements the multiplication function shown in FIG.1 according to one embodiment of the present invention is illustrated. The ROM 100 comprises an 8-bit input 102 and a 32-bit output 104 according to one embodiment of the invention.

In the above-mentioned hash function Equation (1), the four constants 0x42541AFB, 0x5B72939D, 0x2FC81E2D, 0xE1B5973E are multiplied by the four variables IP_SA, IP_DA, S_PORT, D_PORT, respectively, and four interim products thereof are obtained. The interim products are added together and then the sum of the interim products proceeds to a modulus calculation with 20-bit modulus constant 0xFFFFF. Referring to Equation (1), it should be understood that the four constants can first do modulus calculation with constant 0xFFFFF and then multiplied by four variables IP_SA, IP_DA, S_PORT, D_PORT, respectively.

In accordance with one embodiment of the present invention, the ROM 100 contains a 8-bit address and the multiplication result of the input value and the modulus calculation result for one of the four constants. A set of four 8-bit inputs can be inputted to the ROM 100 and a 32-bit output, which is the result of the four 8-bit inputs multiplied by an interim modulus constant after modulus calculation, will be output.

Taking source IP address (IP_SA) as an example, the IP_SA is a 32-bit variable in TCP protocol and can be written into four sets of 8-bit variables. In other words, each set of the 8-bit variable is one-fourth of the 32-bit variable IP_SA. Thus, the IP_SA is shown in Equation (2) as follows:

$$IP\_SA = [\,8b\_3,\ 8b\_2,\ 8b\_1,\ 8b\_0]\dots\dots\dots\dots\dots\dots(2)$$

Where $8b\_3$, $8b\_2$, $8b\_1$, $8b\_0$ are the four sets of 8-bit variables from the highest bit to the lowest bit. In hash function Equation (1), IP_SA is multiplied by the constant 0x42541AFB, and then performed modulus calculation with the constant 0xFFFFF. This result is the same as doing modulus calculation of 0x42541AFB with 0xFFFFF (which is 0x41AFB+0x425=0x4313C), and then being multiplied by the four sets of 8-bit variables, respectively. The result can be obtained from Equation (3) shown as follows:

$$OUT_{R1} = (0x42541AB\ mod\ 0xFFFFF) * IP\_SA\dots\dots\dots\dots\dots(3)$$

Where $OUT_{R1}$ is a result of multiplication between the variable IP_SA and an interim modulus constant (0x42541AB mod 0xFFFFF, i.e., 0x4313C). The products or the multiplication results of 0x4313C times 0, 1, 2...255 is reserved at the addresses 0, 1, 2...255, respectively, in ROM 100. For instance, when the $8b\_0$ is 102 and inputted into ROM 100 as an address, the output 104 should be the value of address 102 in ROM 100, which is the multiplication result of 0x4313C*$8b\_0$. Therefore, the ROM 100 can rapidly calculate $OUT_{R1}$ of Equation (3). The IP_SA is inputted into the ROM 100, and the $OUT_{R1}$ will be output.

In other words, the interim modulus constants are equal to the results of the modulus calculation of 0x42541AFB, 0x5B72939D, 0x2FC81E2D and 0xE1B5973E with 0xFFFFF, respectively. The ROM 100 can be easily adapted to output the modulus calculation result of the four constants in Equation (1) times the four variables IP_SA, IP_DA, S_PORT, D_PORT, respectively. The Equations (4), (5) and (6) which are similar with the Equation (3) are listed as follows:

$$OUT_{R2} = (0x5B72939D\ mod\ 0xFFFFF) * IP\_DA\dots\dots\dots\dots (4)$$

$$OUT_{R3} = (0x2FC81E2D\ mod\ 0xFFFFF) * S\_PORT\dots\dots\dots\dots (5)$$

$$OUT_{R4} = (0xE1B5973E\ mod\ 0xFFFFF) * D\_PORT\dots\dots\dots\dots (6)$$

Where (0x5B72939D mod 0xFFFFF), (0x2FC81E2D mod 0xFFFFF) and (0xE1B5973E mod 0xFFFFF) are interim modulus constants, $OUT_{R2}$, $OUT_{R3}$ and $OUT_{R4}$ are multiplication results of the variables, IP_DA, S_PORT and D_PORT, times the interim modulus constants, respectively.

One skilled in the art will appreciate that the ROM according to one embodiment of the present invention can be any bits times any bits other than 256*32 bits, as long as the input variable is multiplied by one factor which is a constant. The input variable can be used as an address of the ROM, and the value stored in that address will be the product of the variable and the factor.

As such, the ROM 100 can be used to implement the multiplication function. Compared with prior implementation using a complex combination logic, ROM 100 takes much fewer resources and is much more simpler and faster. Therefore, high efficiency can be achieved.

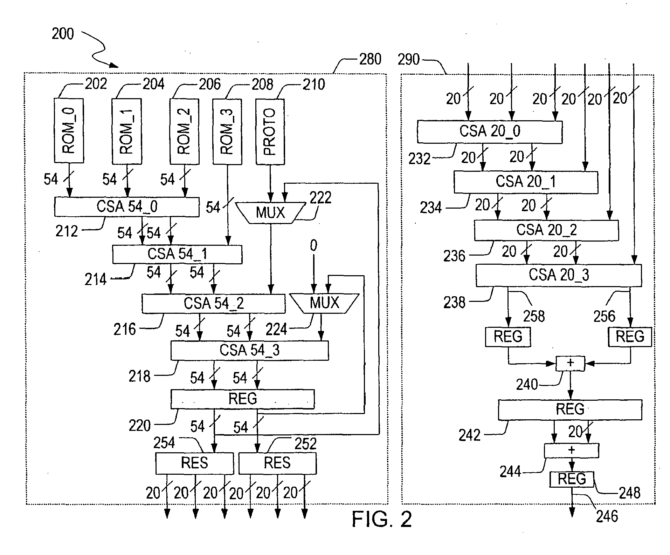

Referring to FIG. 2, a hash unit 200 according to one embodiment of the present invention is illustrated. The logic unit 200 comprises an addition unit 280 and a modulus unit 290. The addition unit 280 comprises ROMs 202, 204, 206, and 208, Carry Save Adders (CSAs) 212, 214, 216, and 218, a protocol bit unit 210, and an register 220. The ROMs 202, 204, 206, and 208 are similar to the ROM 100 shown in FIG. 1. The modulus unit 290 comprises CSAs 232, 234, 236, and 238, an adder 240, and registers 242, 248.

A carry save adder is a digital adder commonly used in computer to compute three or more n-bit binary numbers. In one embodiment of the present invention shown in FIG. 2, three numbers serving as the input numbers to each of the CSAs 212, 214, 216, 218, 232, 234, 236, and 238 are added by the CSA, and two numbers are outputted by the CSA.

It will be apparent for those skilled in the art that other addition logics can be used according to another embodiment of present invention, as long as the outputs of the addition logic are less than the inputs. For instance, if the addition logic has two outputs and four inputs, it may be used for substituting the CSA.

Referring back to FIG.2, in the addition unit 280, The inputs of ROMs 202, 204, 206, 208 are variables IP_SA, IP_DA, S_PORT, D_PORT, respectively. The outputs of ROMs 202, 204, 206, and 208 are multiplication results of the input variables and the interim modulus constants in Equation (1) as described above. In other words, the outputs of the ROMs 202, 204, 206, and 208 are $OUT_{R1}$, $OUT_{R2}$, $OUT_{R3}$, and $OUT_{R4}$ shown in Equations (3), (4), (5), and (6), respectively. The outputs of the ROMs 202, 204, and 206 are inputted into the CSA 212. Outputs of the CSA 212 and output of ROM 208 are inputted into the CSA 214. Outputs of the CSA 214 and output of MUX 222 are inputted into the CSA 216. Outputs of the CSA 216 and output of MUX 224 are inputted into the CSA 218, and outputs of the CSA 218 are inputted into the register 220.

The protocol bit unit 210 employs a number of protocol bits f to indicate the type of transmission protocols used. In accordance with embodiments of the present invention, TCP protocol uses 010 in binary, User Datagram Protocol (UDP) uses 001, and Internet Control Message Protocol (ICMP) uses 101. Those skilled in the art would appreciate that transmission protocols are not limited in TCP, UDP and ICMP, and the protocol bits are not limited to three bits.

Furthermore, when the transmission protocol is TCP or UCP, the source IP address IP_SA and the destination IP address IP_DA are 32-bit binary numbers, the source port S_Port and the destination port D_Port are 16-bit numbers in binary. Those skilled in the art should know that the 16-bit numbers can be treated as 32-bit numbers when doing the addition, only the highest 16 bits are zeros.

MUX 222 and MUX 224 are selectors for selecting one of different inputs as an output according to a control signal. The output of the adding resister 220 are separated into two parts, a first set of addition result bits 254 and a second set of addition result bits 252. The MUX 222 has two inputs, one is the output from the protocol bit unit 210, and the other is from the first set of addition result bits 254 of the register 220. The control signal is a clock cycle signal which is given by a clock counter (not shown) according to one embodiment of the present invention. For instance, when the clock counter counted 1, the MUX 222 selects the protocol bit unit 210 as an output, when the counter counted 2, the MUX 222 selects the first set of addition result bits 254 as an output. Similarly, MUX 224 selects either a second set of addition result bits 252 of register 220 or a number "0".

In accordance with the embodiment of the present invention shown in FIG.2, the addition unit 280 uses only four clock cycles to output an addition result. The inputs of ROMs 202, 204, 206, 208 are four 8-bit variables that are one-fourth of the IP_SA, IP_DA, S_PORT and D_PORT. Since the ROMs 202, 204, 206, 208, CSAs 212, 214, 216, 218 are coupled as a combinational logic, it will finish the addition and output an interim addition result through the register 220 in one clock cycle. Thus, the whole addition will spend four clock cycles.

In an exemplary working period of the addition, during first clock cycle, the lowest 8 bits of variables IP_SA, IP_DA, S_PORT and D_PORT are inputted into the ROMs 202, 204, 206 and 208, respectively. The MUX 222 selects the protocol bit unit 210 as an input of CSA 216, and the MUX 224 selects number "0" as an input of CSA 218. The output of register 220 is the addition result of the lowest 8 bits in one clock cycle. During second clock cycle, the second lowest 8 bits of IP_SA, IP_DA, S_PORT and D_PORT are inputted into ROMs 202, 204, 206 and 208, respectively. Moreover, the outputs of ROMs 202, 204, 206 and 208 will be added eight "0" bits in the end of the multiplication results of each of ROMs 202, 204, 206 and 208 in order to achieve the exact multiplication results of the second lowest 8 bits of IP_SA, 1P_DA, S_PORT, D_PORT multiplied the interim modulus constants. Similarly, the outputs of ROMs 202, 204, 206 and 208 will be added sixteen and twenty-four "0" bits in the end in third and fourth clock cycle, respectively. The MUX 222 selects output the first set of addition result bits 254 of register 220 in the last clock cycle as an input of CSA 216, and the MUX 224 selects the second set of addition result bits 252 of the register 220 in the last clock cycle as an input of CSA 218. The MUXs 222 and 224 work in the same way in third and forth clock. Thus, at the end of this working period of four clock cycles, the outputs of the register 220 is the addition result of a set of parameters including variables and protocol bits.

In other words, the multiplication results of the four variables IP_SA, IP_DA, S_PORT, D_PORT multiplied by the interim modulus constants and the protocol bits should be added together in four clock. Moreover, each of the multiplication results is achieved by dividing each of the four variables into four sets and adding the multiplication results of the four sets multiplied by the interim modulus constants together. The register 220 outputs an interim value of addition result every clock cycle, and the register 220 outputs the first set of addition result bits 254 and the second set of addition result bits 252 at the end of one working period (four clock cycle in one embodiment according to present invention).

Referring back to FIG. 2, as an output of the addition result from the addition unit 280, the output of register 220 is served as inputs of modulus unit 290 and comprises the first set of addition result bits 254 and the second set of addition result bits 252. The modulus unit 290 does modulus calculation between the inputs and 0xFFFFF, and then outputs the modulus result.

In accordance with one embodiment of the present invention shown in FIG.2, the addition result of addition unit 280 comprises a 54-bit of the first set of addition result bits 254 and a 54 bit of the second set of addition result bits 252. Because the modulus constant of the modulus calculation in the hash function is 0xFFFFF, the modulus calculation can be simplified. As shown in Equation (7), the modulus of an integer with 0xFFFFF is the remainder of the integer divided by (0xFFFFF + 1) plus the quotient of the integer divided by (0xFFFFF + 1) and then do modulus calculation with 0xFFFFF. Taking an arbitrary constant 0x45441AB7 as an example, the Equation (7) is shown as follows:

$$(0x454D38A241AB7) \bmod 0xFFFFF = (0x41AB7 + 0x454D38A2) \bmod 0xFFFFF =$$
$$(0x41AB7 + 0xD38A2 + 0x454) \bmod 0xFFFFF \quad \dots\dots\dots\dots\dots\dots\dots\dots\dots\dots\dots (7)$$

Thus, the two sets of 54-bit outputs of addition unit 280 needs to be divided into six 20-bit partial results. In other words, each of the 20-bit partial results has at most same bit numbers of the modulus constant 0xFFFFF. Then, the CSAs 232, 234, 236 and 238 are employed to add these six partial results together in one clock. In one embodiment, the first and second sets of addition result bits 254 and 252 are divided into six 20-bit partial results and inputted into CSA 232. By means of CSAs 232, 234, 236 and 238, all the inputs are added. The outputs of CSA 238 include a first set of result 256 and a second set of result 258, which are added by an adder 240 via two registers 226 and 228. The result of the adder 240 is outputted into the register 242 so as to output an interim hash value. In one embodiment, the bit numbers of interim hash value are no more than 20. In other words, the interim hash value has no more bit numbers than the modulus constant 0xFFFFF. Thus, the interim hash value is the hash value and the modulus calculation costs two clock cycles.

In another embodiment, when the interim hash value of the adder 240 has more bit numbers than 20, it should comprise a carry besides a 20-bit sum. Both the sum and the carry can be added by a result adder 244 in order to obtain a 20-bit parameter 246 which is the hash value of the hash function Equation (1). Thus, the hash value 246 can be outputted by the register 248 and the addition of the result adder 244 will cost one more clock cycle.

Those skilled in the art should know that the modulus constant of the modulus calculation in the hash function should not be limited as 0xFFFFF, it can be a number which is the biggest one having same bit numbers with the hash value. For instance, in Equation (1), the hash value is a 20_bit number in binary, and the modulus constant 0xFFFFF is the biggest 20_bit number in binary. Apparently, if the hash value is a 28_bit number in binary, the modus constant should be 0xFFFFFFF which is the biggest 28_bit number in binary, or in other words, it is the biggest number having same bit numbers with the hash value

It will be apparent for those skilled in the art that one register takes one clock cycle. In the hash unit 200 according to the embodiment of the present invention, the addition unit 280 costs four clock cycles to output the addition result, and the modulus unit 290 costs no more than three clock cycles to output the modulus result 246. Thus, the whole hash unit 200 needs six or seven clocks to calculate the hash result. Therefore, the whole design can reach the frequency of 100 MHz easily.

It should be noted that the spirit of present invention is using ROMs to do multiplication and using CSAs to do modulus calculation to complete the calculation of the whole hash function Equation (1). Thus, the inputs and outputs should not be limited to the bit numbers mentioned above. Furthermore, the ROM and CSA numbers can also be changed according to the input/output bit numbers.

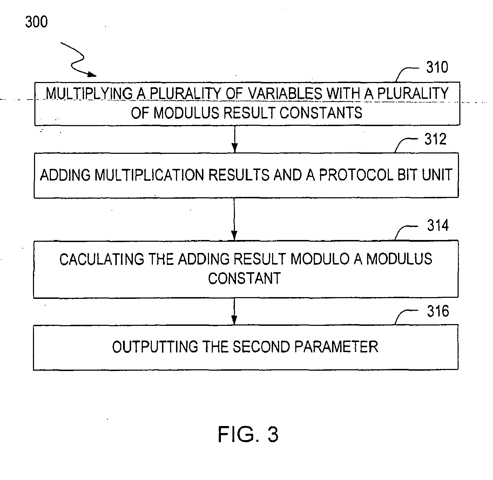

Referring to FIG. 3, a method 300 for hashing a first set of parameters into a second parameter according to the hash function Equation (1) is illustrated according to one embodiment of the present invention. As shown in FIG. 3, at step 310, a plurality of ROMs are employed to perform multiplication between IP_SA, IP_DA, S_PORT , D_PORT and interim modulus constants, respectively, so as to output multiplication results. The interim modulus constants are equal to the modulus results of hash constants 0x42541AFB, 0x5B72939D, 0x2FC81E2D, and 0xE1B5973E modulo a modulus constant 0xFFFFF, respectively. The multiplication results of the interim modulus constants and every possibility of the variables of the parameters, IP_SA, IP_DA, S_PORT and D_PORT are reserved in the multiplication ROMs. The variables are inputted into the plurality of ROMs as addresses, and the multiplication results according to the addresses are outputted.

At step 312, the multiplication results and a protocol bit unit are summed up so as to output an addition result. In one embodiment, three-input and two-output CSAs, each having have three inputs and two outputs, are used to add the multiplication results and the protocol bit unit. Three of the multiplication results are inputted into a first CSA to output the sum of the three inputs via the two outputs of the first CSA. The two outputs of the first CSA and the fourth of the multiplication results are inputted into a second CSA to output the sum of the four multiplication results via the two outputs of the second CSA. The two outputs of the second CSA and the protocol bit unit are inputted into a third CSA to output the sum of the four multiplication results and the protocol bit unit via two output of the third CSA.

At step 314, the modulus of the addition result modulo a modulus constant, such as 0xFFFFF, is calculated. The modulus constant 0xFFFFF is in hexadecimal and thus has 20 bits. As described hereinabove, the addition result can be divided into partial results that have 20 bits or less. The moduluses of those partial results modulo the modulus constant 0xFFFFF are calculated, respectively, and then summed up. In one embodiment, a plurality of CSA are used to sum up those 20-bit partial results to output a 20-bit sum and a carry. A result adder is used to add the sum and the carry, and then the output of the result adder is equal to the second parameter. At step 316, the second parameter is outputted.

While the foregoing description and drawings represent the preferred embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

**Claims**

1. A hash unit implementing a hash function equation using a set of 32-bit variables, a set of constants, a protocol parameter, a modulus constant and a hash value for hashing said set of 32-bit variables and said protocol parameter to said hash value, said hash unit comprising:

    an addition unit for doing multiplication and addition of said hash function equation, wherein each of said set of 32-bit variables being separated into four 8-bit variables and said 8-bit variables being inputted into said addition unit for outputting an interim addition result in one clock cycle, and wherein an addition result of said set of 32-bit variables being generated in four clock cycles and being separated into a first set of addition result bits and a second set of addition result bits ; and

    a modulus unit for doing a modulus calculation of said hash function equation, said modulus unit comprising a first plurality of Carry Save Adders (CSA) for adding said first set of addition result bits and said second set of addition result bits into a first result and a second result in one clock cycle and a first adder for adding said first result and said second result into an interim hash value in one clock cycle so as to output said interim hash value as said hash value in two clock cycles when said interim hash value being less than said modulus constant.

2. The hash unit of claim 1, wherein said addition unit comprises:

    a plurality of Read Only Memories (ROM) for doing said multiplication between said set of 8-bit variables and said set of constants and outputting a plurality of interim products;

    a second plurality of CSAs for doing said addition with said protocol parameter and said plurality of interim products;

3. The hash unit of claim 1, wherein said hash unit being capable of outputting said hash value in six clock cycles.

4. The hash unit of claim 1, further comprising a second adder for adding said interim hash value into said hash value in one clock cycle when said interim hash value has more bit numbers than said modulus constant.

5. The hash unit of claim 4, wherein said hash unit being capable of outputting said hash value in seven clock cycles.

6. The hash unit of claim 1, wherein said modulus constant being a number which is the biggest one having same bit numbers with said hash value.

7. The hash unit of claim 1, wherein said protocol bit unit represent a transmission protocol.

8. The hash unit of claim 7, wherein said transmission protocol being Transmission Control Protocol (TCP).

9. The hash unit of claim 7, wherein said transmission protocol being User Datagram Protocol (UDP).

10. The hash unit of claim 7, wherein said transmission protocol being Internet Control Message Protocol (ICMP).

11. A hash unit for obtaining a hash value from hashing a set of parameters and a protocol parameter, said hash unit comprising:

   a plurality of memory units receiving said set of parameters and outputting a plurality of multiplication results corresponding to multiplication between said set of parameters and a plurality of interim modulus constants; a first plurality of addition logics receiving said plurality of multiplication results for outputting an addition result by adding up said plurality of multiplication results and said protocol parameter and outputting a plurality of partial results of said addition result, wherein said addition result being separated into said plurality of partial results; and a second plurality of addition logics receiving said plurality of partial results of said addition result for adding said plurality of partial results together to generate said hash value wherein said hash value being equal to said addition result modulo a modulus constant, each of said plurality of partial results of said addition result being equal to or less than said modulus constant, and the hash value being equal to a sum of said plurality of partial results of said addition result.

12. The hash unit of claim 11, wherein each of said plurality of memory units is used for multiplying one of said set of parameters by one respective interim modulus constant of said plurality of interim modulus constants so as to output one of said plurality of multiplication results.

13. The hash unit of claim 11, wherein said modulus constant being a number which is the biggest one having same bit numbers with said hash value.

14. The hash unit of claim 11, wherein said plurality of memory units being a plurality of ROMs.

15. The hash unit of claim 11, wherein said first plurality of addition logics being a first plurality of CSAs.

16. The hash unit of claim 11, wherein said second plurality of addition logics being a second plurality of CSAs

17. The hash unit of claim 11, wherein said protocol parameter represent a transmission protocol.

18. A method for obtaining a hash value from hashing a set of parameters, comprising of:

   obtaining a plurality of multiplication results by multiplying each parameter from said set of parameters with a respective interim modulus constant from a plurality of interim modules constants; obtaining an addition result by adding said plurality of multiplication results; obtaining a modulus result by calculating said addition result modulo a modulus constant, said step of obtaining said modulus result comprising:

      obtaining a first remainder and a first quotient by dividing said addition result by said modulus constant plus 1; obtaining a second remainder and a second quotient by dividing said first quotient by said modulus constant plus 1; repeating said step of dividing said quotient until the obtained quotient being equal to zero, and adding said remainders wherein the sum of said remainders being said modulus result; and

   outputting said modulus result as said hash value.

19. The method of claim 18, wherein said step of obtaining a plurality of multiplication results by multiplying each parameter from said set of parameters with a respective interim modulus constant from a plurality of interim modulus constants, said step comprises the steps of:

   individually reserving a plurality of values in a plurality of addresses of a ROM, wherein said plurality of values being respectively equal to said plurality of multiplication results of one of said plurality of interim modulus constants times said plurality of addresses;
respectively inputting said plurality of parameters; and
respectively outputting said plurality of values reserved in one address of said plurality of addresses in response to said inputted parameter of said plurality of parameter as said plurality of multiplication results.

20. The method of claim 18, wherein said plurality of parameters comprises source IP address variable, source port variable, destination IP address variable, and destination port variable.

FIG. 1

FIG. 2

300

310
MULTIPLYING A PLURALITY OF VARIABLES WITH A PLURALITY OF MODULUS RESULT CONSTANTS

312
ADDING MULTIPLICATION RESULTS AND A PROTOCOL BIT UNIT

314
CACULATING THE ADDING RESULT MODULO A MODULUS CONSTANT

316
OUTPUTTING THE SECOND PARAMETER

FIG. 3